# EUROPÄISCHE PATENTSCHRIFT

(11) **EP 2 048 005 B1**
(45) Veröffentlichungstag und Bekanntmachung des Hinweises auf die Patenterteilung: **07.07.2010**
(21) Anmeldenummer: 08162647.5
(22) Anmeldetag: 20.08.2008
(51) Int. Cl.: B60C 9/22, B60C 11/00

(54) **Fahrzeugluftreifen**
Pneumatic tire for vehicles
Pneumatique pour véhicules

(30) Priorität: 11.10.2007 DE 102007048726
(43) Veröffentlichungstag der Anmeldung: 15.04.2009
(73) Patentinhaber: Continental Reifen Deutschland GmbH, 30165 Hannover (DE)
(72) Erfinder: Horner, Stefan, 24848, Kropp (DE); Nojek, Rafal, 30161, Hannover (DE); Schacht, Arne, 30177, Hannover (DE); Peda, Karl, 31515, Wunstorf (DE)
(74) Vertreter: Finger, Karsten

(56) Entgegenhaltungen:
- EP-A- 1 671 814
- EP-A- 1 712 377
- WO-A-2007/071284
- DE-A1- 3 720 788
- JP-A- 57 147 901

## Beschreibung

Die Erfindung betrifft einen Fahrzeugluftreifen in Radialbauart für Personenkraftwagen, mit einer Karkasseinlage, einem Laufstreifen, Wulstbereichen mit Wulstkernen und Kernprofilen, Seitenwänden, einem zwischen dem Laufstreifen und der Karkasseinlage angeordneten, mehrlagigen Gürtel sowie einer an der Außenseite des Gürtels angeordneten, zumindest eine Bandagenlage aufweisenden Gürtelbandage aus Bandagenmaterial mit in Umfangsrichtung verlaufenden Verstärkungskorden, wobei der Reifen eine bezüglich der Äquatorebene asymmetrische Außenkontur aufweist, wobei der auf einer Felge montierte Reifen eine bezüglich der geometrischen Mittelebene asymmetrische Außenkontur aufweist, wobei in der einen, ersten Reifenhälfte die Außenkontur flacher ausgeführt ist als in der zweiten Reifenhälfte, wobei bei montiertem und aufgepumptem Reifen,
in der ersten Reifenhälfte die flachere Außenkontur definiert ist durch ein Verhältnis eines Radius R₁ zur Nennbreite N_{B} von 1,8 bis 5,0,
in der zweiten Reifenhälfte die rundere Außenkontur definiert ist durch ein Verhältnis eines Radius R₂ zur Nennbreite NB von 1,2 bis 2,5,
und das Verhältnis von TW 45 zur Nennbreite N_{B} von 0,7 bis 1,0 beträgt,
wobei TW 45 die Breite des Laufstreifen zwischen zwei Punkten P_{TW1} und P_{TW2} ist, wobei jeder dieser Punkte P_{TW1} und P_{TW2} der Schnittpunkt einer unter 45° zur Radialen an der Schulteraußenseite verlaufenden Tangente mit einer in Verlängerung der Außenkontur des Laufstreifens verlaufenden Kurve ist, und wobei R₁ bzw. R₂ jeweils der Radius eines Kreisbogens ist, welcher durch den Punkt P_{TW1} bzw. P_{TW2} und den Scheitelpunkt S der Außenkontur des Laufstreifens geht und tangential in den Scheitelpunkt der Außenkontur läuft.

Ein derartiger Fahrzeugluftreifen ist aus der EP-A-1 712 377 bekannt. Bei einem Reifen der Dimension 205/65R15 ist in der ersten Reifenhälfte mit der flacheren Außenkontur das Verhältnis des Radius zur Nennbreite etwa 2, in der zweiten Reifenhälfte mit der runderen Außenkontur beträgt das Verhältnis des Radius zur Nennbreite etwa 1,9. Darüber hinaus weist der Laufstreifen dieses Reifens in den beiden Reifenhälften eine unterschiedliche Laufstreifenprofilierung auf. Dabei steht die Optimierung der effektiven Bodenkontaktfläche in den beiden Laufstreifenhälften im Vordergrund, um die Fahreigenschaften des Reifens auf trockenem und nassem Untergrund zu verbessern.

Der aus der JP 57 147901 A bekannte Reifen weist eine asymmetrische Außenkontur auf, wobei in der einen Reifenhälfte die Außenkontur flacher ausgeführt ist als in der zweiten Reifenhälfte. Darüber hinaus ist in den beiden Laufstreifenhälften durch eine unterschiedliche Ausführung der Laufstreifenprofilierung die Bodenkontaktfläche deutlich unterschiedlich.

Eine weitere Ausführung eines asymmetrisch ausgeführten Reifens ist aus der WO 2007/ 071284 A bekannt. Die Asymmetrie bewirkt unterschiedlich hohe Schulterbereiche. Auch die Laufstreifenprofilierung ist unterschiedlich in den beiden Laufstreifenhälften, um die Handlingeigenschaften und das Aquaplaningverhalten zu verbessern.

Bei dem aus der DE 37 20 788 A1 bekannten Fahrzeugluftreifen weist die der Fahrzeugaußenseite zugeordnete Laufstreifenhälfte eine größere Positivfläche auf als die der Fahrzeuginnenseite zugeordnete Laufstreifenhälfte. Der Reifen besitzt ferner eine asymmetrische Außenkontur mit unterschiedlichen Radien in den beiden Reifenhälften und unterschiedlich steife Wulstbereiche. Mit einem derart ausgeführten Reifen soll das Fahrverhalten sowohl auf trockenen als auch auf nassen Straßen verbessert werden.

Die EP-A-1 671 814 betrifft einen asymmetrisch ausgeführten Run-Flat-Reifen. Dieser Reifen weist daher bei Luftdruckverlust eine gewisse Tragfähigkeit auf. Zu diesem Zweck sind in den Reifenseitenwänden Stützelemente eingebracht, wobei die Innenseite des Reifens weicher ausgelegt ist als die Außenseite.

Aus der US-A-6,508, 284 ist ein asymmetrischer Reifen bekannt, welcher gemeinsam mit einem zweiten, gleich ausgeführten Reifen ein Paar von Reifen bildet, welcher an der Hinterachse eines speziellen Rennfahrzeuges, welches einen ovalen Rennkurs befährt, montiert wird. Einer der Schulterbereiche des Reifens ist gegenüber dem anderen abgesenkt, wobei das Reifenpaar derart montiert wird, dass jeweils der abgesenkte Schulterbereich der Außenseite des Rennkurses zugewandt ist. Damit soll auf einem ovalen Rennkurs das Ansprechverhalten der Reifen auf der Hinterachse verbessert werden.

Der Erfindung liegt die Aufgabe zu Grunde, einen Reifen der eingangs genannten Art gezielt derart asymmetrisch auszuführen, dass er im üblichen Fahrbetrieb in einer Vielzahl von Eigenschaften gleichermaßen optimiert werden kann. Zu diesen Eigenschaften gehören vorrangig die Handlingeigenschaften, die Abriebseigenschaften, das Aquaplaning-Verhalten sowie die Griffeigenschaften. Insbesondere geht es bei der Erfindung darum, die bei der üblichen symmetrischen Ausgestaltung von Reifen mögliche Eigenschaftsoptimierung deutlich zu übertreffen.

Gelöst wird die gestellte Aufgabe erfindungsgemäß dadurch,
dass die Bandage
entweder eine den Gürtel bedeckende Bandagenlage aufweist, welche aus zwei Bandagenlagenabschnitten besteht, von welchen der eine in der einen Reifenhälfte verläuft und ein Festigkeitsträgermaterial enthält, welches einen im Wesentlichen linearen Kraft-Dehnungs-Verlauf aufweist, wobei der Bandagenlagenabschnitt über die geometrische Mittelebene hinaus in die andere Reifenhälfte verläuft und in einem Abstand von der geometrischen Mittelebene endet, wobei der an diesen Abschnitt anschließende Abschnitt ein Festigkeitsträgermaterial enthält, welches ab rund 2,5% Dehnung einen steilen, linearen Anstieg in der Kraft-Dehnungs-Kurve zeigt,
oder zwei den Gürtel bedeckende Bandagenlagen und eine weitere, streifenförmige Bandagenlage an der Reifenschulter in der ersten Reifenhälfte aufweist, wobei das Festigkeitsträgermaterial in diesen Lagen einen im Wesentlichen linearen Kraft-Dehnungs-Verlauf aufweist.

In der ersten Reifenhälfte mit der flacheren Außenkontur ist daher die Bodenaufstandsfläche größer als in der zweiten, runderen Reifenhälfte. Die Asymmetrie in der "Rundheit" der Außenkonturen des Reifens hat speziell Auswirkungen auf Veränderungen der Größe der Bodenaufstandsfläche bei Kurvenfahrt. Die erfindungsgemäßen Ausführungen der Bandage, die den Gürtelverband außen bedeckt, zeigen gemeinsam mit der asymmetrischen Außenkontur besonders vorteilhafte Reifeneigenschaften. Im Rahmen der Erfindung besonders geeignete Bandagenausführungen bewirken ein spezielles dynamisches Wachstum des Reifens mit zunehmender Geschwindigkeit. Im Geschwindigkeitsbereich bis etwa 80 km/h soll keine oder kaum eine Änderung der Außenkontur des Reifens eintreten. Im mittleren Geschwindigkeitsbereich um etwa rund 120 km/h soll sich die Außenkontur des Reifens derart ändern, dass durch ein Reifenwachstum in der runderen Reifenhälfte die Kontur flacher und dadurch die Bodenaufstandsfläche größer wird, was sich günstig auf die Handlingseigenschaften und den Abrieb auswirkt. Bei weiter zunehmender Geschwindigkeit soll sich die Außenkontur des Reifens derart ändern, dass er wieder eine rundere Kontur in der zweiten Reifenhälfte annimmt, ähnlich der Ausgangskontur, die Bodenaufstandsfläche wird dadurch wieder etwas schmäler, was sich auf die Haltbarkeit des Reifens bei hohen Geschwindigkeiten günstig auswirkt. Diese Effekte werden mit den Bandagenkonstruktionen gemäß Anspruch 1 erreicht.

Bei erfindungsgemäß ausgeführten Reifen kann die erste Reifenhälfte, welche die flachere Außenkontur aufweist, die der Fahrzeuginnenseite zuzuordnende Hälfte sein. Derart am Fahrzeug montierte Reifen weisen eine Reihe von vorteilhaften Eigenschaften auf, beispielsweise stellt sich bei Kurvenfahrt eine gleichmäßige Druckverteilung in der Bodenaufstandsfläche ein.

Alternativ dazu kann bei erfindungsgemäß ausgeführten Reifen die Reifenhälfte mit der flacheren Außenkontur die der Fahrzeugaußenseite zuzuordnende Hälfte sein. Ein Vorteil dieser Montageart am Fahrzeug besteht beispielsweise in der höheren Haltbarkeit des Reifens bei hohen Geschwindigkeiten, da die Reifeninnenseite unter den üblichen Fahrzeugsturzbedingungen im Schulterbereich nicht so stark belastet wird.

Bei der erstgenannten Bandagenausführung ist es ferner von Vorteil, wenn eine weitere, den breiteren Abschnitt zumindest im Wesentlichen überdeckende und mit diesem im Wesentlichen gleich breit ausgeführte Bandagenlage vorgesehen ist, welche ein Festigkeitsträgermaterial enthält, welches einen im Wesentlichen linearen Kraft-Dehnungs-Verlauf aufweist.

Für das erwünschte dynamische Wachstum des Reifens in den erwähnten Geschwindigkeitsbereichen ist es ferner von Vorteil, wenn der breitere Abschnitt der den Gürtel bedeckenden Bandagenlagen in einem Abstand von der geometrischen Mittelebene des Reifens endet, der zwischen 10% und 80% der Breite dieser Lage in der zweiten Reifenhälfte beträgt.

Als Festigkeitsträgermaterial mit einem steilen, linearen Anstieg in der Kraft-Dehnungs-Kurve ab rund 2,5% Dehnung wird bevorzugt ein Hybridkord verwendet, beispielsweise ein Kord aus Nylon und Aramid.

Der Bandagenlagestreifen der zweitgenannten Bandagenausführung weist insbesondere eine Breite von 15% bis 25% der Gürtelbandage auf.

Als Festigkeitsträgermaterial mit dem erwähnten im Wesentlichen linearen Kraft-Dehnungs-Verlauf in den Bandagenlagen bzw. Bandagenlagenabschnitten wird bevorzugt Nylon eingesetzt.

Erfindungsgemäße Fahrzeugluftreifen können darüber hinaus derart ausgeführt sein, dass sie in der ersten und der zweiten Reifenhälfte jeweils unterschiedlich steife Seitenwände aufweisen. Die steifere bzw. versteifte Seitenwand hat bei am Fahrzeug montiertem Reifen dem Fahrzeug zugewandt zu sein. Dabei wird insbesondere die Seitenwand in der Reifenhälfte mit der flachen Außenkontur als versteifte Seitenwand ausgeführt. Zur Versteifung eignen sich beispielsweise an sich bekannte Bauteile, wie Chipper, Flipper oder Chafer, also Einlagen mit verstärkenden Fasern oder Korden aus textilen Materialien oder Stahl.

Weitere Merkmale, Vorteile und Einzelheiten der Erfindung werden anhand der Zeichnung, die schematisch mehrere Ausführungsbeispiele darstellt, näher beschrieben. Dabei zeigen
Fig. 1 einen Querschnitt durch einen gemäß der Erfindung ausgeführten Fahrzeugluftreifen für Personenkraftwagen und
Fig. 2 und Fig. 3 bevorzugte Ausführungsformen von bezüglich des Reifenäquators asymmetrischen Gürtelbandagen.

Die in der nachfolgenden Beschreibung angegebenen Werte für Radien und sonstige Abmessungen des Reifens sind auf einen auf einer Felge montierten und unter Nenndruck (gemäß E.T.R.T.O.- Standards) gesetzten Reifen bezogen. Die Formdaten (die Abmessungen der Vulkanisationsform) weisen im Allgemeinen im Wesentlichen übereinstimmende Abmessungen auf.

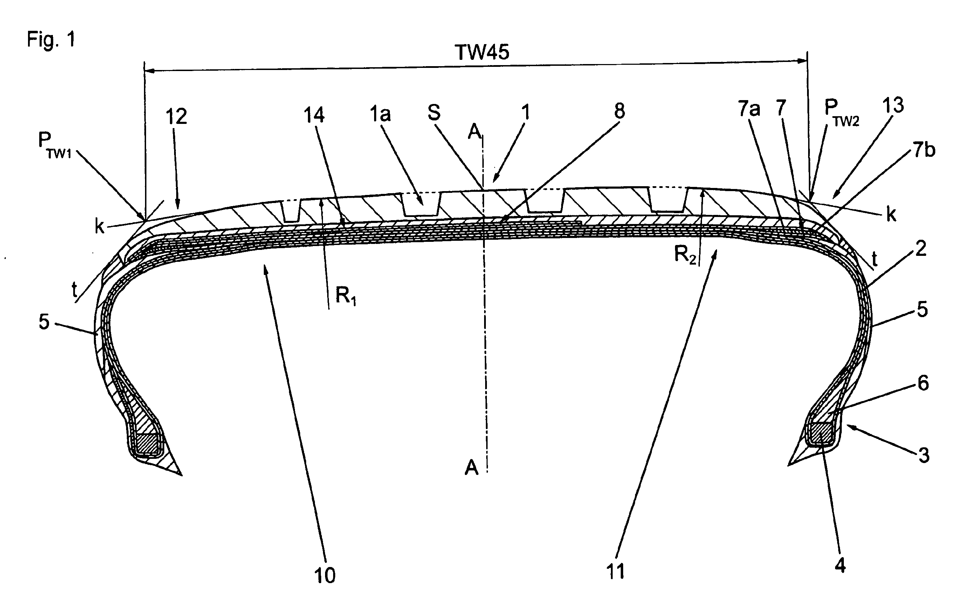

Fig. 1 zeigt einen Fahrzeugluftreifen mit einem Laufstreifen 1, einer ein- oder mehrlagigen Karkasseinlage 2, die in Wulstbereichen 3 um Wulstkerne 4 verläuft und im Bereich von Seitenwänden 5, wie dargestellt, enden kann, ferner mit Kernprofilen 6 radial außerhalb der Wulstkerne 4 sowie mit einem Gürtelverband 7 und einer Bandage 14.

Der Laufstreifen 1 kann als einteiliger Laufstreifen ausgeführt sein, wird jedoch bevorzugt in bekannter Weise aus einem Laufstreifenbasisteil und einem Laufstreifencapteil gefertigt. Die Laufstreifenprofilierung, von welcher in Fig. 1 beispielhaft Umfangsnuten 1a dargestellt sind, kann beliebig ausgeführt sein. Der zwischen dem Laufstreifen 1 und der Karkasseinlage 2 befindliche Gürtelverband besteht bei der dargestellten Ausführungsform aus zwei Gürtellagen 7a, 7b, die auf herkömmliche Weise aufgebaut sein können und aus in eine Gummimischung eingebetteten und innerhalb jeder Lage jeweils parallel zueinander verlaufenden Festigkeitsträgern, insbesondere Stahlkorden, bestehen. Die auf bekannte Weise im Kreuzverband zueinander verlaufenden Stahlkorde der beiden Gürtellagen 7a, 7b schließen mit der Umfangsrichtung jeweils einen spitzen Winkel ein, der in der Größenordnung von 22° bis 38° gewählt wird.

Der Reifen weist einen bezüglich der geometrischen Mittelebene A-A asymmetrischen Aufbau verbunden mit einer bezüglich der geometrischen Mittelebene asymmetrischen Außenkontur auf. In der nachfolgenden Beschreibung wird der Reifen als aus zwei unterschiedlichen Reifenhälften 10, 11 bestehend bzw. zusammengesetzt betrachtet, wobei als erste Reifenhälfte 10 die in den Figuren linke Hälfte, als zweite Reifenhälfte 11 die in den Figuren rechte Hälfte bezeichnet ist. Die Reifenschulter 12 ist jene in der ersten Reifenhälfte 10, die Schulter 13 jene in der zweiten Reifenhälfte 11.

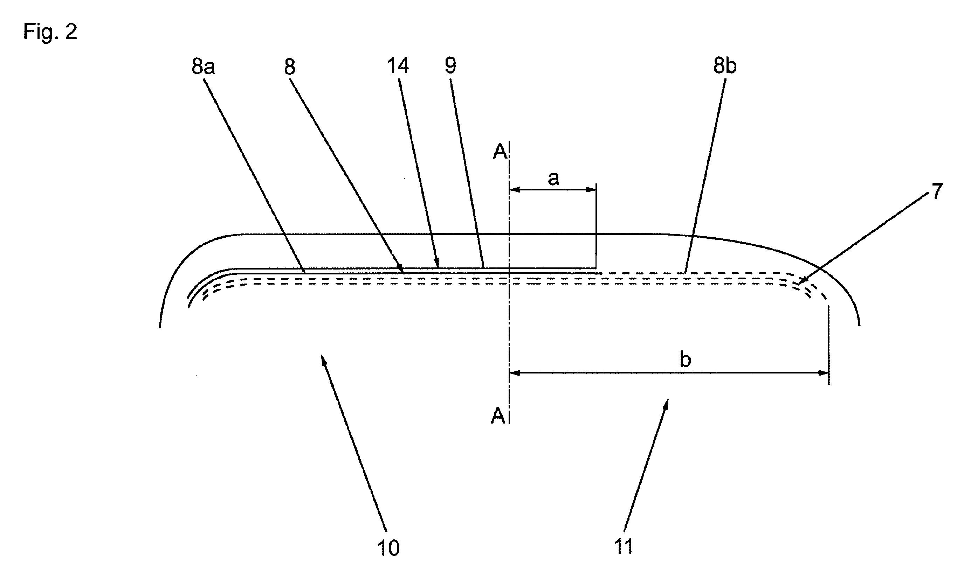

In den Zeichnungsfiguren ist die Außenkontur der zweiten Reifenhälfte 11 runder ausgeführt als die Außenkontur der ersten Reifenhälfte 10. Dabei wird die Außenkontur der zweiten Reifenhälfte 11 von einem Radius R₂, die Außenkontur in der ersten Reifenhälfte 10 von einem Radius R₁ bestimmt. Der Radius R₁ bzw. der Radius R₂ ist der Radius eines Kreisbogens, welcher durch den Scheitelpunkt S und den Punkt P_{TW1} bzw. P_{TW2} geht und jeweils tangential in den Scheitelpunkt S der Außenkontur verläuft. Die in Fig. 1 eingezeichnete Laufstreifenbreite TW 45 entspricht dem gegenseitigen Abstand der Punkte P_{TW1} und P_{TW2} und ist etwas größer als die Breite des Reifens im Untergrund, wenn der Reifen auf einer Felge montiert und unter Druck größer ist. Die Punkte P_{TW1} und P_{TW2} sind, wie es Fig. 2 zeigt, jeweils im Schnittpunkt einer unter 45° zur radialen Richtung verlaufenden Tangante t an die jeweilige Reifenschulter mit einer flachen Kurve k, welche die Verlängerung der Außenkontur des Laufstreifens über den seitlichen Rand der Bodenaufstandsflächenbreite hinaus, ist.

Bei erfindungsgemäß ausgeführten Reifen ist durch die rundere Außenkontur die Bodenaufstandsfläche in der zweiten Reifenhälfte 11 kleiner als in der ersten Reifenhälfte 10. In den beiden Reifenhälften 10, 11 werden durch diese Maßnahmen bestimmte Reifeneigenschaften stärker beeinflusst als andere. In der Reifenhälfte 10 mit der flacheren Außenkontur und der größeren Bodenaufstandsfläche können größere Kräfte zwischen dem Untergrund und dem Reifen besser übertragen werden, was für die Bremswirkung von Vorteil ist. In der Reifenhälfte 11 mit der runderen Außenkontur und der schmäleren Bodenaufstandsfläche braucht weniger Wasser verdrängt werden. Dies ist für die Aquaplaningeigenschaften von Vorteil. Die rundere Außenkontur begünstigt ferner die Hochgeschwindigkeitseigenschaften. Bei Kurvenfahrt vergrößert sich die Bodenaufstandsfläche, wodurch andere Eigenschaften, beispielsweise Handling und Griff, begünstigt werden.

Die erste und die zweite Reifenhälfte 10, 11 können unterschiedlich steife Seitenwände 5 aufweisen. So ist insbesondere die Seitenwand 5 in der ersten Reifenhälfte steifer ausgeführt als die Seitenwand 5 in der zweiten Reifenhälfte 11. Zur Versteifung der Seitenwand 5 in der ersten Reifenhälfte 10 können spezielle versteifende Einlagen vorgesehen sein, welche beispielsweise Korde oder Fasern aus textilen Materialien oder aus Stahl aufweisen oder welche aus Gummi mit einem hohen Elastizitätsmodul bestehen. Als versteifende Einlagen können an sich bekannte Bauteile, wie Chipper, Flipper oder Chafer eingebracht sein. Auch ein Kernprofil mit größerer radialer Erstreckung kann eine versteifende Einlage bilden. Infolge der unterschiedlichen Ausführung der Seitenwände 5 in der ersten Reifenhälfte 10 und in der zweiten Reifenhälfte 11 weist die Reifenwand 5 in der ersten Reifenhälfte 10 eine auf bis zum 10-Fachen größere Biegesteifigkeit auf als jene der in der zweiten Reifenhälfte 11. Wird diese Maßnahme vorgesehen, hat die steifere bzw. die versteifte Seitenwand 5 bei montiertem Reifen dem Fahrzeug zugewandt zu sein.

Fig. 2 zeigt eine Ausführungsvariante einer bezüglich der geometrischen Mittelebene A-A asymmetrisch ausgeführten Gürtelbandage 14. Die Bandage 14 besteht aus zwei Bandagenlagen 8, 9, wobei die radial innere Bandagenlage 8 die Gürtelkanten überdeckt und aus zwei Bandagenlagenabschnitten 8a, 8b zusammengesetzt ist. Der Bandagenlagenabschnitt 8a verläuft in der ersten Reifenhälfte 10 und über die geometrische Mittelebene A-A hinaus bis in die zweite Reifenhälfte 11 hinein und endet hier in einem Abstand a vom Reifenäquator A-A, der zwischen 10 % und 80 % der Erstreckung b der Lage 8 in der zweiten Reifenhälfte 11 beträgt.
Dementsprechend ergibt sich das Ausmaß der Erstreckung des Bandagenlagenabschnittes 8b. Die Bandagenlage 9 verläuft in der ersten Reifenhälfte 10 und analog zum Bandagenlagenabschnitt 8a um den Abstand a über die geometrische Mittelebene A-A hinaus. Die Bandagenlagen 8 und 9 bestehen aus in Gummi eingebetteten, parallel zueinander und in Umfangsrichtung des Reifens verlaufenden Korden und werden beim Reifenaufbau bevorzugt aus einem oder mehreren mit Korden versehenen Kautschukmischungsstreifen durch kontinuierliches und spiraliges Wickeln über den Umfang des Reifens erstellt. Der Bandagenlagenabschnitt 8a und die Bandagenlage 9 enthalten beispielsweise Nylon NKD06T (940 x 2 - 101, D728) als Verstärkungskord, welches einen nahezu linearen Kraft-Dehnungs-Verlauf aufweist. Die Verstärkungskorde im Bandagenlagenabschnitt 8b sind Korde mit einem speziellen Kraft-Dehnungs-Verlauf, insbesondere Hybridkorde, welche beispielsweise aus einem Kordkern aus Nylon bestehen, welcher mit einem oder mehreren Aramidfäden wendelförmig umwickelt ist. Solche Hybridkorde weisen beispielsweise einen Kraft-Dehnungs-Verlauf auf, bei dem zwischen 0 % und 2,5 % Dehnung ein moderater Kraftanstieg auf etwa 130 N/cm erfolgt, und ab etwa 2,5 % Dehnung ein steiler linearer Anstieg der Kraft-Dehnungs-Kurve auf etwa 740 N/cm bei 4 % Dehnung und 2600 N/cm bei 8 % Dehnung erfolgt.

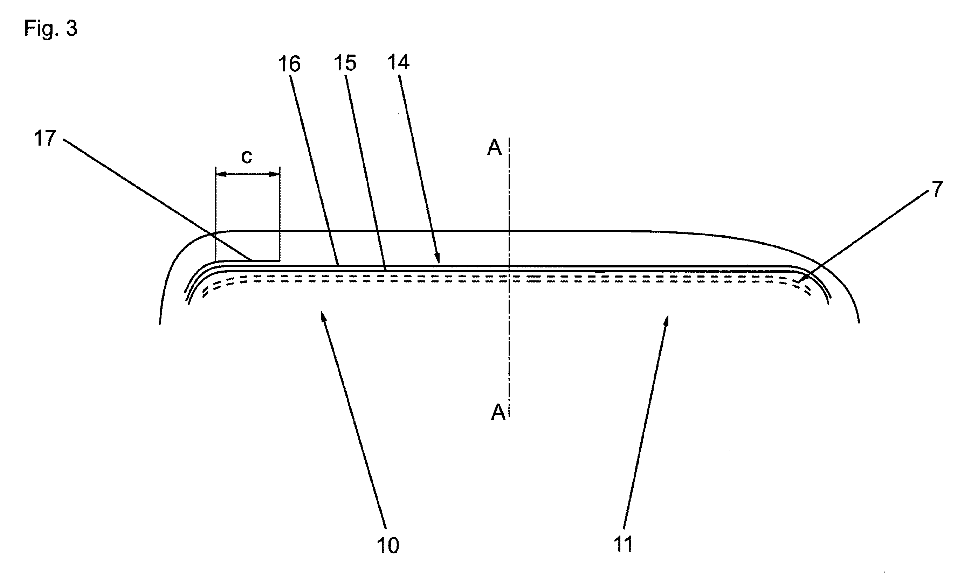

Bei der in Fig. 3 gezeigten Ausführungsvariante besteht die Bandage 14 aus zwei Bandagenlagen 15, 16, welche sich mit übereinstimmenden Aufbau über den kompletten Gürtelverband erstrecken. Die Bandagenlagen 15, 16 bestehen insbesondere aus in Gummi eingebetteten und in Umfangsrichtung verlaufenden Korden aus Nylon, beispielsweise aus dem oben bereits erwähnten Nylon NKD06T. In der ersten Reifenhälfte 10 ist zusätzlich radial außerhalb des randseitigen Abschnittes der Bandagenlage 16 ein Bandagenlagenstreifen 17 eingebracht, welcher eine Breite c von 5 % bis 25 % der größten Breite der Bandage 14, insbesondere etwa 20 %, beträgt. Auch der Streifen 17 ist bevorzugt eine Nylonbandage der erwähnten Konstruktion und des erwähnten Aufbaus. Die Bandagenlagen 15, 16 sowie der Streifen 17 können auch aus anderen Materialien entstehen.

Bei erfindungsgemäß ausgeführten Reifen ist ferner in der ersten Reifenhälfte 10 mit flachere Außenkontur das Verhältnis von R₁ zur Nennbreite N_{B} von 1,8 bis 5,0, das Verhältnis von TW 45 zur Nennbreite N_{B} beträgt von 0,7 bis 1,0. In der zweiten Reifenhälfte 11 mit der runderen Außenkontur mit dem Radius R₂ beträgt das Verhältnis von R₂ zur Nennbreite NB von 1,2 bis 2,5 und das Verhältnis von TW 45 zur Nennbreite N_{B} von 0,7 bis 1,0.

Die Bandagenausführung zeigt gemeinsam mit der speziellen Außenkontur des Fahrzeugluftreifens ein besonderes dynamisches Wachstum des Reifens bei zunehmender Geschwindigkeit. Bei einer Ausführung des Reifens gemäß Fig. 2 und Fig. 3 tritt bei Geschwindigkeiten bis etwa 80 km/h keine oder kaum eine Änderung der Außenkontur des Reifens ein. Im mittleren Geschwindigkeitsbereich um etwa rund 120 km/h ändert sich die Außenkontur des Reifens derart, dass durch ein Reifenwachstum in der runderen Reifenhälfte 11 die Kontur flacher und dadurch die Bodenaufstandsfläche größer wird, was sich günstig auf die Handlingeigenschaften und den Abrieb auswirkt. Mit weiter zunehmender Geschwindigkeit werden die auf den Reifen wirkenden Fliehkräfte größer und die Außenkontur des Reifens ändert sich derart, dass er wieder eine rundere Kontur in der zweiten Reifenhälfte 11 annimmt, ähnlich der Ausgangskontur, da sich das Bandagenmaterial in der zweiten Reifenhälfte 11 nun weniger dehnt im Vergleich zu jenem in der ersten Reifenhälfte 10. Die Bodenaufstandsfläche wird daher wiederum etwas schmäler, was sich auf die Haltbarkeit des Reifens bei hohen Geschwindigkeiten günstig auswirkt.

Die Reifenhälfte 10 mit der flacheren Außenkontur hat Vorteile im Bremsen und im Abriebsverhalten, wobei sich bis zu einer Geschwindigkeit von etwa 80 km/h kaum eine Änderung der Außenkontur des Reifens einstellt. Im mittleren Geschwindigkeitsbereich um etwa 120 km/h ändert sich die Außenkontur des Reifens derart, dass durch ein Wachstum in der Reifenhälfte 10 die Kontur nur leicht runder wird, was die zuvor genannten Eigenschaften kaum beeinflusst. Mit weiter zunehmender Geschwindigkeit werden die auf den Reifen wirkenden Fliehkräfte größer und die Außenkontur des Reifens ändert sich derart, dass ein Wachstum hauptsächlich im Bereich des Reifenzenits auftritt, da die höhere Steifigkeit in der Reifenschulter der Reifenhälfte 10 (zusätzlicher Bandagenstreifen im Schulterbereich) ein weiteres Wachstum verhindert. Die Bodenaufstandsfläche wird dadurch etwas schmäler, was sich auf die Haltbarkeit des Reifens bei hohen Geschwindigkeiten günstig auswirkt.

Wird ein gemäß Fig. 2 und 3 ausgeführter Reifen am Fahrzeug derart montiert, dass die erste Reifenhälfte 10 der Fahrzeuginnenseite und die zweite Reifenhälfte 11 der Fahrzeugaußenseite zugeordnet ist, stellt sich vor Allem bei Kurvenfahrt eine gleichmäßige Druckverteilung in der Bodenaufstandsfläche ein. Wird dabei gleichzeitig die Seitenwandkonstruktion, wie oben beschrieben, asymmetrisch ausgelegt, demnach an der Reifenhälfte 10 an der Fahrzeuginnenseite steifer ausgeführt, wird vermieden, dass die Bodenaufstandsfläche unter Kurvenfahrt auf der Kurveninnenseite signifikant kleiner wird als bei Geradeausfahrt. Die weichere Seitenwand an der Fahrzeugaußenseite bringt Vorteile in den Handlingeigenschaften und im Grenzbereich der Kurvenfahrt, da immer eine möglichst große Kontaktfläche zum Untergrund zur Verfügung steht, um Kräfte zwischen Reifen und Straße zu übertragen.

Wird ein Reifen mit der in Fig. 1 gezeigten Außenkontur mit der in Fig. 3 gezeigten Bandage kombiniert, so treten grundsätzlich ähnliche Effekte in den zwei erwähnten unteren Geschwindigkeitsbereichen - bis etwa 80 km/h und im Bereich um etwa 120 km/h - wie oben beschrieben, auf, mit dem Unterschied, dass die eintretenden Effekte etwas geringer sind als bei einer Ausführung des Reifens mit einer Bandagenkonstruktion gemäß Fig. 2. Wird ein derart ausgeführter Reifen am Fahrzeug derart montiert, dass die erste Reifenhälfte 10 der Fahrzeuginnenseite zugewandt ist, so hat der Reifen die oben beschriebenen Eigenschaften. Bei wesentlich höheren Geschwindigkeiten wächst die Seite 11 stärker als die Seite 10 wodurch die Bodenaufstandsfläche breiter wird, was sich auf die Haltbarkeit des Reifens etwas ungünstig auswirkt. Diese Konstruktion oder eine Konstruktion nach Fig. 3, jedoch ohne Lage 15, ist daher für Reifen für niedrigere Geschwindigkeitsbereiche geeignet.

Es ist auch möglich, erfmdungsgemäß ausgeführte Reifen - Außenkontur gemäß Fig. 1 wahlweise mit einer der Bandagenkonstruktionen nach Fig. 2 oder Fig. 3 - derart an einem Fahrzeug zu montieren, dass die zweite Reifenhälfte 11 jeweils der Fahrzeuginnenseite zugewandt ist. Die beschriebenen geschwindigkeitsabhängigen Effekte treten gleichermaßen auf. Durch die Asymmetrie in der Reifenrundheit - die Reifenkontur an der Innenseite ist runder als jene an der Außenseite - hat diese Variante größere Vorteile bezüglich der Haltbarkeit des Reifens bei hohen Geschwindigkeiten, weil die Reifeninnenseite unter den üblichen Fahrzeugsturzbedingungen im Schulterbereich nicht so stark belastet wird.

### Bezugszeichenliste

- 1: Laufstreifen
- 2: Karkasseinlage
- 3: Wulstbereich
- 4: Wulstkern
- 5: Seitenwand
- 6: Kernprofil
- 7: Gürtelverband
- 7a: Gürtellage
- 7b: Gürtellage
- 8: Bandagenlage
- 8a: Bandagenlagenabschnitt
- 8b: Bandagenlagenabschnitt
- 9: Bandagenlage
- 10: Reifenhälfte
- 11: Reifenhälfte
- 12: Reifenschulter
- 13: Reifenschulter
- 14: Bandage
- 15: Bandagenlage
- 16: Bandagenlage
- 17: Bandagenlage
- a: Abstand
- b: Abstand

## Patentansprüche

1. Fahrzeugluftreifen in Radialbauart für Personenkraftwagen mit einer Karkasseinlage (2), einem Laufstreifen (1), Wulstbereichen (3) mit Wulstkernen (4) und Kernprofilen (6), Seitenwänden (5), einem zwischen Laufstreifen und Karkasseinlage angeordneten, mehrlagigen Gürtel (7) sowie einer an der Außenseite des Gürtels (7) angeordneten, zumindest eine Bandagenlage (8, 9, 15, 16) aufweisenden Gürtelbandage (14) aus Bandagenmaterial mit in Umfangsrichtung verlaufenden Verstärkungskorden, wobei der auf einer Felge montierte Reifen eine bezüglich der geometrischen Mittelebene (A-A) asymmetrische Außenkontur aufweist, wobei in der einen, ersten Reifenhälfte (10) die Außenkontur flacher ausgeführt ist als in der zweiten Reifenhälfte (11), wobei bei montiertem und aufgepumptem Reifen,
in der ersten Reifenhälfte (10) die flachere Außenkontur definiert ist durch ein Verhältnis eines Radius R₁ zur Nennbreite N_{B} von 1,8 bis 5,0,
in der zweiten Reifenhälfte (11) die rundere Außenkontur definiert ist durch ein Verhältnis eines Radius R₂ zur Nennbreite NB von 1,2 bis 2,5,
und das Verhältnis von TW 45 zur Nennbreite N_{B} von 0,7 bis 1,0 beträgt,
wobei TW 45 die Breite des Laufstreifen zwischen zwei Punkten P_{TW1} und P_{TW2} ist, wobei jeder dieser Punkte P_{TW1} und P_{TW2} der Schnittpunkt einer unter 45° zur Radialen an der Schulteraußenseite verlaufenden Tangente mit einer in Verlängerung der Außenkontur des Laufstreifens verlaufenden Kurve ist, und wobei R₁ bzw. R₂ jeweils der Radius eines Kreisbogens ist, welcher durch den Punkt P_{TW1} bzw. P_{TW2} und den Scheitelpunkt S der Außenkontur des Laufstreifens geht und tangential in den Scheitelpunkt der Außenkontur läuft, **dadurch gekennzeichnet,**
**dass** die Bandage (14)
entweder eine den Gürtel (7) bedeckende Bandagenlage (8) aufweist, welche aus zwei Bandagenlagenabschnitten (8a, 8b) besteht, von welchen der eine in der ersten Reifenhälfte (10) verläuft und ein Festigkeitsträgermaterial enthält, welches einen im Wesentlichen linearen Kraft-Dehnungs-Verlauf aufweist, wobei der Bandagenlagenabschnitt (8a) über die geometrische Mittelebene (A-A) hinaus in die zweite Reifenhälfte (11) verläuft und in einem Abstand (a) von der geometrischen Mittelebene (A-A) endet, wobei der an diesen Abschnitt (8a) anschließende Abschnitt (8b) ein Festigkeitsträgermaterial enthält, welches ab rund 2,5% Dehnung einen steilen, linearen Anstieg in der Kraft-Dehnungs-Kurve zeigt,
oder zwei den Gürtel bedeckende Bandagenlagen (15, 16) und eine weitere, streifenförmige Bandagenlage (17) an der Reifenschulter in der ersten Reifenhälfte (10) aufweist, wobei das Festigkeitsträgermaterial in diesen Lagen (15, 16, 17) einen im Wesentlichen linearen Kraft-Dehnungs-Verlauf aufweist.

2. Fahrzeugluftreifen nach Anspruch 1, **dadurch gekennzeichnet, dass** die erste Reifenhälfte (10), welche die flachere Außenkontur aufweist, die der Fahrzeuginnenseite zuzuordnende Hälfte ist.

3. Fahrzeugluftreifen nach Anspruch 1, **dadurch gekennzeichnet, dass** die erste Reifenhälfte (10), welche die flachere Außenkontur aufweist, die der Fahrzeugaußenseite zuzuordnende Hälfte ist.

4. Fahrzeigluftreifen nach einem der Ansprüche 1 bis 3, **dadurch gekennzeichnet, dass** eine weitere, den breiteren Abschnitt (8a) zumindest im Wesentlichen überdeckende und mit dieser im Wesentlichen gleich breit ausgeführte Bandagenlage (9) mit einem Festigkeitsträgermaterial, welches einen im Wesentlichen linearen Kraft-Dehnungs-Verlauf aufweist, vorgesehen ist.

5. Fahrzeugluftreifen nach einem der Ansprüche 1 bis 3, **dadurch gekennzeichnet, dass** das Festigkeitsträgermaterial mit dem steilen, linearen Anstieg in der Kraft-Dehnungs-Kurve ab rund 2,5% Dehnung ein Hybridkord ist, beispielsweise ein Kord aus Nylon und Aramid.

6. Fahrzeugluftreifen nach einem der Ansprüche 1 bis 5, **dadurch gekennzeichnet, dass** der breitere Abschnitt (8a) der den Gürtel (7) bedeckenden Bandagenlage (8) in einem Abstand (a) von der geometrischen Mittelebene (A-A) endet, der zwischen 10 % und 80 % der Breite dieser Lage (8) in der zweiten Reifenhälfte (11) beträgt.

7. Fahrzeugluftreifen nach Anspruch 1, **dadurch gekennzeichnet, dass** der Bandagenlagenstreifen (17) eine Breite (c) von 15 % bis 25 % der Breite der Bandage (14') aufweist.

8. Fahrzeugluftreifen nach einem der Ansprüche 1 bis 7, **dadurch gekennzeichnet, dass** das Festigkeitsträgermaterial mit dem im Wesentlichen linearen Kraft-Dehnungs-Verlauf Nylon ist.

9. Fahrzeugluftreifen nach einem der Ansprüche 1 bis 8, **dadurch gekennzeichnet, dass** die Seitenwand (5) in der ersten Reifenhälfte (10) steifer ist als jene in der zweiten Reifenhälfte (11).

10. Fahrzeugluftreifen nach Anspruch 9, **dadurch gekennzeichnet, dass** die steife Seitenwand (5) mittels Lagen oder Bauteilen mit textilen oder aus Stahl bestehenden Fasern, Korde und dergleichen und/oder mittels Gummi mit hohem E-Modul versteift ist.

## Claims

1. Pneumatic vehicle tyre of a radial type of construction for passenger cars with a carcass insert (2), a tread rubber (1), bead regions (3) with bead cores (4) and bead fillers (6), sidewalls (5), a multiply breaker belt (7), arranged between the tread rubber and the carcass insert, and also a belt bandage (14), which is arranged on the outer side of the breaker belt (7), has at least one bandage ply (8, 9, 15, 16) and consists of bandage material with reinforcing cords running in the circumferential direction, the tyre fitted on a rim having an outer contour which is asymmetric with respect to the geometrical centre plane (A-A), the outer contour being made flatter in the one, first half of the tyre (10) than in the second half of the tyre (11),
the flatter outer contour in the first half of the tyre (10) when the tyre is fitted and inflated being defined by a ratio of a radius R₁ to the nominal width N_{B} of from 1.8 to 5.0,
the rounder outer contour in the second half of the tyre (11) being defined by a ratio of a radius R₂ to the nominal width N_{B} of from 1.2 to 2.5,
and the ratio of TW 45 to the nominal width N_{B} being from 0.7 to 1.0, where TW 45 is the width of the tread rubber between two points P_{TW1} and P_{TW2}, where each of these points P_{TW1} and P_{TW2} is the point of intersection of a tangent running at 45° to the radial on the outer side of the shoulder with a curve running as an extension of the outer contour of the tread rubber, and where R₁ and R₂ are respectively the radius of an arc of a circle that passes through the point P_{TW1} or P_{TW2} and the apex point S of the outer contour of the tread rubber and runs tangentially into the apex point of the outer contour,
**characterized**
**in that** the bandage (14)
either has one bandage ply (8), which covers the breaker belt (7) and comprises two bandage ply portions (8a, 8b), one of which runs in the first half of the tyre (10) and includes a strengthening support material that has a substantially linear stress-strain profile, the bandage ply portion (8a) running beyond the geometrical centre plane (A-A) into the second half of the tyre (11) and ending at a distance (a) from the geometrical centre plane (A-A), the portion (8b) that adjoins this portion (8a) including a strengthening support material which has a steep, linear rise in the stress-strain curve as from a strain of around 2.5%,
or has two bandage plies (15, 16), which cover the breaker belt, and a further bandage ply (17) in the form of a strip on the tyre shoulder in the first half of the tyre (10), the strengthening support material in these plies (15, 16, 17) having a substantially linear stress-strain profile.

2. Pneumatic vehicle tyre according to Claim 1, **characterized in that** the first half of the tyre (10), which has the flatter outer contour, is the half that can be assigned to the inner side of the vehicle.

3. Pneumatic vehicle tyre according to Claim 1, **characterized in that** the first half of the tyre (10), which has the flatter outer contour, is the half that can be assigned to the outer side of the vehicle.

4. Pneumatic vehicle tyre according to one of Claims 1 to 3, **characterized in that** a further bandage ply (9), which at least substantially covers over the wider portion (8a) and is made to be substantially the same width as the latter, is provided with a strengthening support material which has a substantially linear stress-strain profile.

5. Pneumatic vehicle tyre according to one of Claims 1 to 3, **characterized in that** the strengthening support material with the steep, linear rise in the stress-strain curve as from a strain of around 2.5% is a hybrid cord, for example a cord of nylon and aramid.

6. Pneumatic vehicle tyre according to one of Claims 1 to 5, **characterized in that** the wider portion (8a) of the bandage ply (8) covering the breaker belt (7) ends at a distance (a) from the geometrical centre plane (A-A) that is between 10% and 80% of the width of this ply (8) in the second half of the tyre (11).

7. Pneumatic vehicle tyre according to Claim 1, **characterized in that** the bandage ply strip (17) has a width (c) of from 15% to 25% of the width of the bandage (14').

8. Pneumatic vehicle tyre according to one of Claims 1 to 7, **characterized in that** the strengthening support material with the substantially linear stress-strain profile is nylon.

9. Pneumatic vehicle tyre according to one of Claims 1 to 8, **characterized in that** the sidewall (5) in the first half of the tyre (10) is stiffer than that in the second half of the tyre (11).

10. Pneumatic vehicle tyre according to Claim 9, **characterized in that** the stiff sidewall (5) is stiffened by means of plies or components with textile or steel fibres, cords and the like and/or by means of rubber with a high modulus of elasticity.

## Revendications

1. Pneumatique à structure radiale pour roue de voiture automobile, présentant une garniture de carcasse (2), une bande de roulement (1), des zones de bourrelet (3) qui présentent une âme de bourrelet (4) et un profilé d'âme (6), des parois latérales (5), une ceinture multicouche (7) disposée entre la bande de roulement et la garniture de carcasse ainsi qu'un bandage de ceinture (14) en matériau de bandage disposé sur le côté extérieur de la ceinture (7), doté de câbles de renfort qui s'étendent dans le sens de sa périphérie et d'une couche de bandage (8, 9, 15, 16),
le pneumatique monté sur une jante présentant un contour extérieur asymétrique par rapport à son plan géométrique central (A-A),
le contour extérieur étant plus aplati dans une première moitié (10) du pneumatique que dans la deuxième moitié (11) du pneumatique,
lorsque le pneumatique est monté et gonflé, le contour extérieur plus aplati de la première moitié (10) du pneumatique étant défini par un rapport entre le rayon R₁ et la largeur nominale N_{B} de 1,8 à 5,0, le contour extérieur plus arrondi étant défini dans la deuxième moitié (11) du pneumatique par un rapport entre le rayon R₂ et la largeur nominale N_{B} de 1,2 à 2, 5,
le rapport entre TW 45 et la largeur nominale N_{B} étant de 0,7 à 1,0,
TW 45 étant la largeur de la bande de roulement entre deux points P_{TW1} et P_{TW2}, chacun de ces points P_{TW1} et P_{TW2} étant le point de concours d'une tangente qui forme un angle de 45° par rapport à la radiale sur le côté extérieur de l'épaulement et d'une courbe qui s'étend dans le prolongement du contour extérieur de la bande de roulement, R₁ et R₂ représentant chacun le rayon d'un arc de cercle qui passe par le point P_{TW1} ou P_{TW2} et le point de sommet S du contour extérieur de la bande de roulement et qui s'étend tangentiellement au contour extérieur en son point de sommet,
**caractérisé en ce que**
le bandage (14) présente
soit une couche de bandage (8) qui couvre la ceinture (7) et qui est constituée de deux parties (8a, 8b) de couche de bandage dont l'une s'étend dans la première moitié (10) du pneumatique et contient un matériau de renfort dont l'évolution du rapport force-allongement est essentiellement linéaire,
la partie (8a) de couche de bandage s'étendant au-delà du plan géométrique central (A-A) jusque dans la deuxième moitié (11) du pneumatique et se terminant à une distance (a) du plan géométrique central (A-A),
la partie (8b) qui se raccorde à cette partie (8a) contenant un matériau de renfort qui présente une augmentation linéaire de la courbe force-allongement à partir d'un allongement d'environ 2,5 %,
soit deux couches de bandage (15, 16) qui recouvrent la ceinture et une autre couche de bandage (17) en forme de ruban sur l'épaulement du pneumatique dans la première moitié (10) du pneumatique, le matériau de renfort de ces couches (15, 16, 17) présentant une évolution essentiellement linéaire du rapport force-allongement.

2. Pneumatique pour roue de voiture automobile selon la revendication 1, **caractérisé en ce que** la première moitié (10) du pneumatique qui présente le contour extérieur plus aplati est la moitié associée au côté intérieur du véhicule.

3. Pneumatique pour roue de voiture automobile selon la revendication 1, **caractérisé en ce que** la première moitié (10) du pneumatique qui présente le contour extérieur plus aplati est la moitié qui est associée au côté extérieur du véhicule.

4. Pneumatique pour roue de voiture automobile selon l'une des revendications 1 à 3, **caractérisé en ce qu'**une autre couche de bandage (9) qui recouvre au moins essentiellement la partie plus large (8a) et qui présente essentiellement la même largeur que celle-ci est dotée d'un matériau de renfort dont l'évolution du rapport force-allongement est essentiellement linéaire.

5. Pneumatique pour roue de voiture automobile selon l'une des revendications 1 à 3, **caractérisé en ce que** le matériau de renfort qui présente l'augmentation linéaire accusée de la courbe de force-allongement à partir d'un allongement d'environ 2,5 % est un câble hybride, par exemple un câble de nylon et d'aramide.

6. Pneumatique pour roue de voiture automobile selon l'une des revendications 1 à 5, **caractérisé en ce que** la partie plus large (8a) de la couche de bandage (8) qui couvre la ceinture (7) se termine à une distance (a) du plan géométrique central (A-A) qui représente entre 10 % et 80 % de la largeur de cette couche (8) dans la deuxième moitié (11) du pneumatique.

7. Pneumatique pour roue de voiture automobile selon la revendication 1, **caractérisé en ce que** la largeur (c) du ruban (17) de couche de bandage représente de 15 % à 25 % de la largeur du bandage (14').

8. Pneumatique pour roue de voiture automobile selon l'une des revendications 1 à 7, **caractérisé en ce que** le matériau de renfort dont l'évolution du rapport force-allongement est essentiellement linéaire est le nylon.

9. Pneumatique pour roue de voiture automobile selon l'une des revendications 1 à 8, **caractérisé en ce que** la paroi latérale (5) de la première moitié (10) du pneumatique est plus rigide que celle de la deuxième moitié (11) du pneumatique.

10. Pneumatique pour roue de voiture automobile selon la revendication 9, **caractérisé en ce que** la paroi latérale rigide (5) est rigidifiée au moyen de couches ou de composants qui présentent des fibres textiles ou des fibres d'acier, des câbles et similaires, ou au moyen de caoutchouc à module d'élasticité plus élevé.
